# EUROPEAN PATENT APPLICATION

(11) **EP 4 830 875 A1**
(43) Date of publication of application: **28.10.2026**
(21) Application number: 26172159.1
(22) Date of filing: 14.04.2026
(51) Int. Cl.: B25J 9/00, B25J 5/00, B25J 5/04, B25J 15/06, B25J 19/00

(54) **OPERATOR AND TRANSPORTER ROBOT**

(30) Priority: 17.04.2025 IT 202500008658
(71) Applicant: Oversonic Robotics S.r.l. Societá Benefit, 20841 Carate Brianza (MB) (IT)
(72) Inventor: ZAFFARONI, Roberto, 20841 Carate Brianza (MB) (IT); PAGANI, Fabio, 20841 Carate Brianza (MB) (IT); PUGLIA, Fabio, 20841 Carate Brianza (MB) (IT)
(74) Representative: Botti & Ferrari S.p.A.

(57) **Abstract**

It is herein described an operator and transporter humanoid robot (1) comprising a robotic torso (2), at least two robotic arms (3) connected sideways to the robotic torso (2) opposite each other, at least one support column (11) for the robotic torso (2) and a navigation and transport base defined between a front end (13) and a rear end (14).

The support column (11) is fitted close to the front end (13) of the base (12) and the navigation and transport base comprises a transport plate (15) comprising transport elements in a substantially central position between the front end (13) and the rear end (14) or close to the rear end (14) of the base (12).

The support column (11) and the transport plate (15) are adapted to rotate about an axis that is transversal to the navigation and transport base in a coordinated and counter-rotating and/or selective manner.

## Description

### Field of application

The present invention relates to an operator and transporter robot adapted to replicate the form and function of a human, with improved load-bearing and distribution capabilities.

Said invention finds particular application in the field of automation, as it can be used in a variety of ways across a range of sectors, from industry - particularly in warehouse management - to many others.

The following description is made with reference to this field of application with the sole aim of simplifying the exposition thereof.

### Prior art

As is well known, in this technical field, numerous studies have been carried out with a view to developing robots capable of replacing humans in a variety of applications, particularly to ensure safety or to speed up a process, but also in cases of simple automation.

One of the areas that has been the subject of the most in-depth research in recent years concerns the use of robots in industrial settings, particularly in warehouse management, partly due to the rapid evolution of e-commerce services, which require a continuous, rapid, efficient and precise response to requests.

A number of technologies have been developed in this field, including autonomous mobile robots (AMRs), which are self-driving robots equipped with sensors, scanners and actuators that enable them to navigate along pre-defined routes and lift and transport materials within a factory, moving autonomously and safely around people, equipment and goods.

They essentially consist of intelligent mobile platforms that can be guided, for example, underneath a pallet to load it and move it around the warehouse.

At the same time, work is also ongoing on the development of humanoid robots capable of carrying relatively small objects, and of handling and picking items located in different positions or stacked on top of one another.

Although the solutions currently available are fairly effective, they do not yet fully meet all management requirements.

In particular, there is a loading phase for objects that is limited by their position and/or weight.

The technical problem of the present invention is thus to provide a technical solution that solves the current prior art drawbacks.

Particularly, an object of the invention is to provide a solution that offers optimal load capacity combined with rapid and efficient handling of the items to be moved, compared to the prior art solutions.

A further object of the invention is to devise a solution that can be ideal for a wide range of objects and requirements.

Finally, an object of the invention is to provide a solution that is both effective and, at the same time, has a lower cost impact than current prior art solutions.

### Summary of the invention

The solution idea underlying the present invention is to provide a solution that harnesses the adaptability of humanoid robots alongside a high payload capacity, combining these with efficient loading capabilities.

Based on this solution ides, the technical problem is solved by an operator and transporter humanoid robot comprising a robotic torso, at least two robotic arms connected sideways to the robotic torso opposite each other, at least one support column for the robotic torso and a navigation and transport base defined between a front end and a rear end, the support column being fitted in a substantially central position between said front end and rear end or close to the front end of the base, the navigation base comprising a transport plate comprising transport elements close to the rear end of the navigation and transport base.

The support column and the transport plate are adapted to rotate about an axis that is transversal to the navigation and transport base in a coordinated and counter-rotating and/or selective manner.

Advantageously, the present solution enables the robot to move close to an object or a group of objects to be loaded and/or close to an unloading position, exploiting the rotational capabilities of the robotic torso supported by the support column and of the rotating plate to move in a coordinated manner with respect to each other and to adopt the robotic arms to grasp and position the objects from a stationary position to the support plate of the navigation and transport base or vice versa.

According to a preferred embodiment, the robot according to the invention further comprises at least one manipulation element at an end of each robotic arm opposite the connection to the robotic torso.

Specifically, preferably, at the free end of the robotic arm there may be provided a robotic hand or a pincer element able to grasp the object to be moved in a precise manner.

Preferably, the navigation and transport base and/or the at least one manipulation element are provided with a drive of the pneumatic type.

Advantageously, the present solution enables the robot to handle and transport a greater payload, thanks to significantly higher force values compared to the almost exclusively electric solutions typically used in prior art applications.

Still preferably, the manipulation element further comprises a suction cup system with Venturi vacuum generator.

Advantageously, this solution ensures even greater gripping capacity, thereby preventing any problems caused by the accidental dropping of the object or objects being handled.

In a preferred embodiment of the invention, the support column of the robotic torso is integrated in a telescopic tower adapted to raise the robotic torso with respect to the navigation and transport base, by providing the robotic torso with a greater range of motion and travel, thereby enabling it to reach objects at a wide variety of heights.

Advantageously, said solution, driven, preferably, in hybrid mode, that is, by means of an electric motor and a pneumatic cylinder, making it possible to optimise the robot's dimensions whilst reaching objects located at greater heights, thereby also optimising warehouse space by stacking objects or arranging them in structures that make better use of vertical space.

Furthermore, in a preferred embodiment of the invention, the robot further comprises a autonomous moving system for the navigation and transport base.

Advantageously, the robot is thus equipped with an integrated moving system that enables it to move within a designated area.

However, nothing prevents from planning an external moving system for the robot.

Preferably, the autonomous moving system comprises at least four wheels of the mecanum type arranged sideways in pairs opposite the navigation and transport base.

Advantageously, this solution is very practical and flexible, allowing movement in any direction and at any angle and in any direction, being able to complete the rotation during the translation, without first rotating and then translating.

Still preferably, an encoder external to each wheel adapted to detect position and speed of said wheel is provided.

In this way, in addition to the connection between the wheel and the motor via a gearbox - preferably with an encoder fitted to the motor - this encoder provides a dual reading of the wheel's position, thereby ensuring reliable position control through the dual reading channel that is thus created.

According to a preferred embodiment, the robot according to the invention further comprises a rotation system of the robotic torso in a pitch direction and/or in a roll direction and/or in a yaw direction.

Advantageously, the present solution enables the robot to enhance its capabilities and adaptability in carrying out its tasks of picking up and handling objects.

Still further, according to a preferred embodiment, the transport elements comprise a vertical development element with hooking portions at the transport plate, the vertical development element being preferably telescopic.

Advantageously, the present solution allows for organized and precise picking and placement from the and onto the navigation and support base, for instance, when transporting elements in the shape of reels.

According to a preferred embodiment, the robot according to the invention further comprises a battery system for the navigation and transport base, the battery system being arranged in independent rows along a longitudinal development of the navigation and transport base and being adapted to supply power one row at a time.

Advantageously, the present solution and configuration allow exploit the power supply of a row of batteries, and once they are flat, whether these are disposable batteries to be replaced or rechargeable batteries to be disconnected, it allows the disconnection to be carried out by acting from just one side of the robot in an immediate and simplified way for the operator.

Furthermore, according to a preferred embodiment, the robot according to the invention comprises a robotic head connected to the robotic torso.

Advantageously, said solution allows implementing additional functions, such as the use of bionic eyes or the exploitation of additional functions that replicate human ones.

Nothing prevents from considering alternative solutions, such as a camera placed on the robotic torso or directly on the head, or in place of this or sensors arranged differently.

The features and advantages of the operator and transporter robot according to the invention will become clearer from the following description of embodiments given by way of non-limiting example with reference to the appended claims.

### Brief description of the drawings

In these drawings:

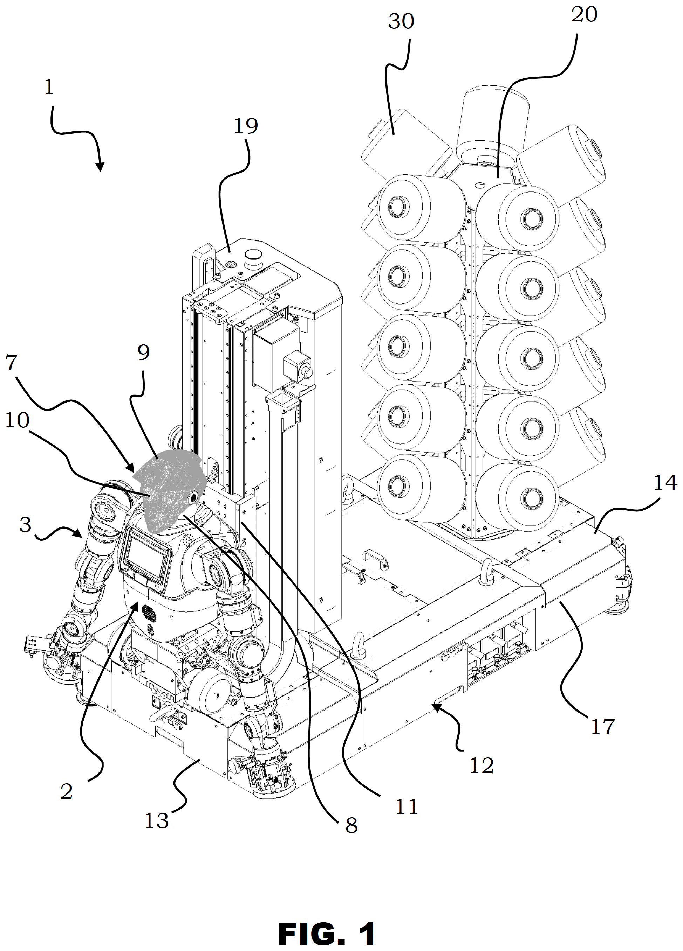

- Figure 1 shows a schematic perspective view of an operator and transporter robot according to the present invention;

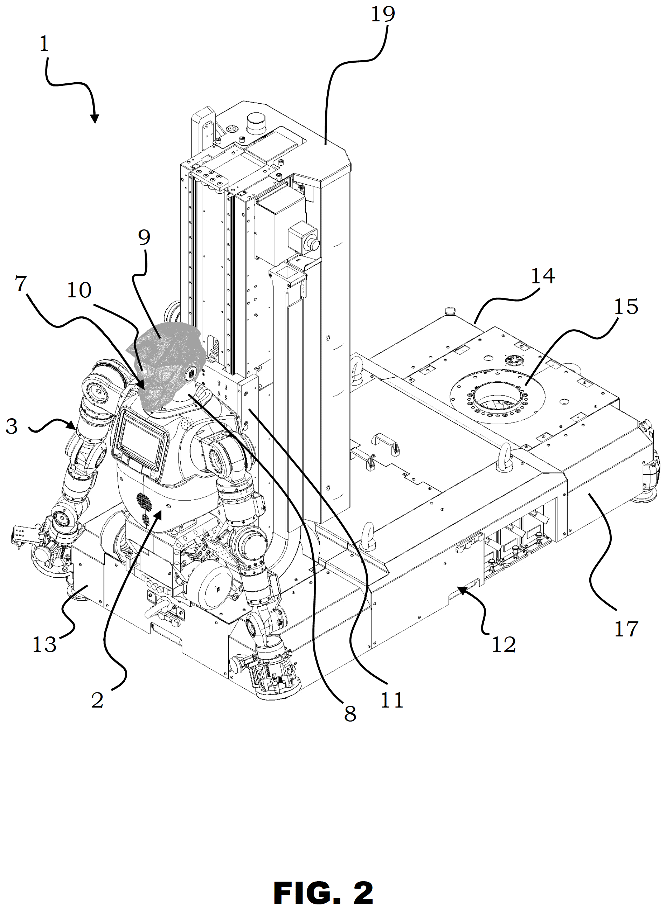

- Figure 2 shows another schematic perspective view of the robot of Figure 1 without a vertical transport element;
- Figure 3 shows a frontal view of a robotic arm of the robot of Figure 1;
- Figure 4 shows a schematic view of a suction cup system with Venturi vacuum generator of a robotic arm of the robot of Figure 1;
- Figure 5 shows a schematic perspective view of a telescopic tower for the robotic torso of the robot of Figure 1;
- Figure 6 shows a schematic side view of the telescopic tower of Figure 4 without outer cover;
- Figure 7 shows a schematic side view of the robotic torso of the robot of Figure 1 in which a rotation system is activated in pitch;
- Figure 8 shows a schematic frontal view of the robotic torso of the robot of Figure 1 in which a rotation system is activated in roll;
- Figure 9 shows a schematic view of a rotation system of the robotic torso of the robot of Figure 1;
- Figure 10 shows a schematic perspective view of a navigation and transport base of the robot of Figure 1 without outer cover;
- Figure 11 shows a schematic top view of the navigation and transport base of Figure 10;
- Figure 12 shows a schematic side view of the navigation and transport base of Figure 10 without outer cover;
- Figure 13 shows a schematic perspective view of a vertical development element with hooking portions of the robot of Figure 1;
- Figure 14 shows a partially sectional schematic view of the vertical development element with hooking portions of Figure 13.

### Detailed description

With reference to these figures, an operator and transporter robot made according to the present invention and globally indicated as robot 1 is herein described.

It should be noted that the figures represent schematic views and are not drawn to scale, but instead they are drawn so as to enhance the important features of the invention. Furthermore, in the figures, the different pieces are shown schematically, since their shape may vary according to the desired application. Moreover, particular expedients illustrated in a figure in relation to an embodiment may also be used in one or more of the embodiments illustrated in the other figures.

Furthermore, structurally and functionally equal elements in the several figures, and in particular analogous to the prior art solutions as above described, are indicated hereinafter with the same alphanumeric references.

In the following description, relative terms such as "above", "below", "upwards", "downwards" will be used with reference to the illustrations of the probes and of the probe heads given in the figures with the only purpose of simplifying the exposition thereof.

Finally, indications of particular geometries (circular, rectangular) or of the arrangement of the elements (parallel, orthogonal, contiguous), as well as the term "substantially" are always to be intended in relation to physical elements and not to geometrically abstract ones, and therefore must always take into account the tolerances introduced by the passage from a pure mathematical/geometric world to the real world.

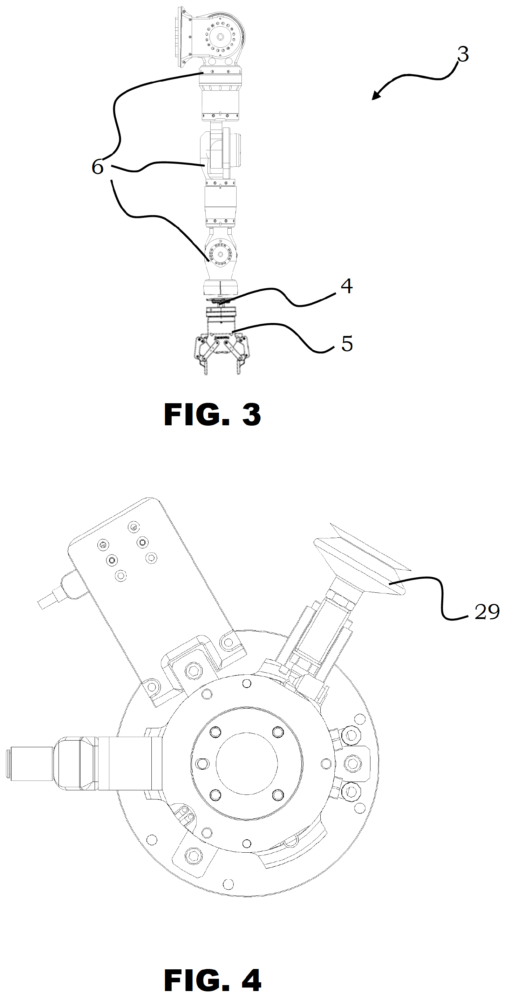

The robot 1, in the present exemplifying embodiment, comprises a robotic torso 2 and at least two robotic arms 3, an embodiment of which is shown in Figure 3, connected sideways al robotic torso 2 opposite each other.

In said embodiment, each robotic arm 3 comprises six joints 6 to confer six degrees of freedom and has a payload capacity of at least 8.5 kg up to 10 kg depending on the configurations.

However, since the 6 joints on the robotic arm 3 are preferably configurable, the arrangement can vary, depending on the contingent needs.

At least one load-bearing motor is also provided (not shown).

Moreover, in the present embodiment, at an end 4 of each robotic arm 3 opposite the connection to the robotic torso 2 comprises at least one manipulation element 5.

The manipulation element 5 may be composed by a clamp, a robotic hand o different elements.

In the case of a clamp, a three-arm self-centering pneumatic clamp may be adopted with a pair of sensors to check the opening/closing status of the clamp, a depth chamber and a clamping element for opening/closing.

Still further, each robotic arm 3 comprises, preferably, load cells on the end 4 of the robotic arm 3, in practice the wrist, to be able to obtain confirmation of the grip of an object or its loss within a cycle in parallel with the feedback given by the manipulation element 5, if present, to be able to have feedback on any collisions before having reached the position target or to be able to make a real estimate of the mass in grip.

The resetting of the load-bearing motors of the robotic arms is then preferably carried out via mechanical pins.

Still preferably, a robotic head 7 is further provided, connected to the top of the robotic torso 2, more preferably by means of the interposition of a coupling neck 8, which, in the present embodiment, is provided with a pair of joints.

Preferably, the robotic head 7 comprises a helmet 9 with an integrated vision camera 10 that allows for the recognition of distant objects and their position, as well as preferably also having an empathic feedback function.

In this configuration, preferably the robotic torso 2 includes part of the electronics of the robot 1 and, obviously, the attachments for the coupling neck 8, the robotic head 7 and the robotic arms 3.

Further, the upper part of the robotic torso 2, in the present exemplifying and non-limiting embodiment, is provided with a metal shell that groups together a series of components, listed herein still by way of non-all-inclusive example: gearmotors, an STO splitter card, a LAN Ethercat hub, a USB hub, a 48V splitter, a 24V splitter, 4force to Can cards, a SpiToEth card for Ethernet-CAN card communication, a sound card/amplifier, an EB80 multiple base, input and output modules.

Electrical connectors for the robotic arms 3 are provided on the rear.

The front part features a touchscreen integrated into the metal casing of the robotic torso 2, an audio amplifier, speakers, a RealSense ID camera and a microphone.

The robotic torso 2 is supported by a support column 11 connectable in a position opposite the robotic head 7 or on a back of the robotic torso 2.

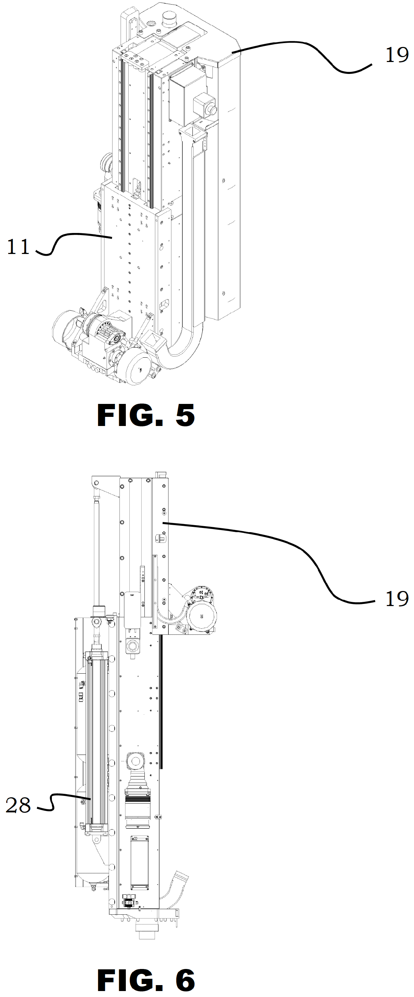

As visible in Figures 5 and 6, in the present embodiment, the support column 11 of the robotic torso 2 is integrated in a telescopic tower 19 a raise the robotic torso 2 with respect to a navigation and transport base 12.

In preferred and non-limiting embodiments, the telescopic tower 19 allows the robotic torso and arms connected thereto to have a stroke of up to 1400 mm. Thanks to this solution, the robot 1 is able, on the one hand, to easily reach the ground with its three robotic arms and, on the other, to reaching a height of over 3000 mm.

Therefore, this provides a wide range, with the option, of course, to increase or decrease it as required.

The telescopic axle allows not having excessive height and at the same time not having a too high centre of gravity which could compromise stability.

This is coupled with the ability of the robot 1, as mentioned, to rotate and thus load from the front and unload from the rear in a "dynamic warehouse".

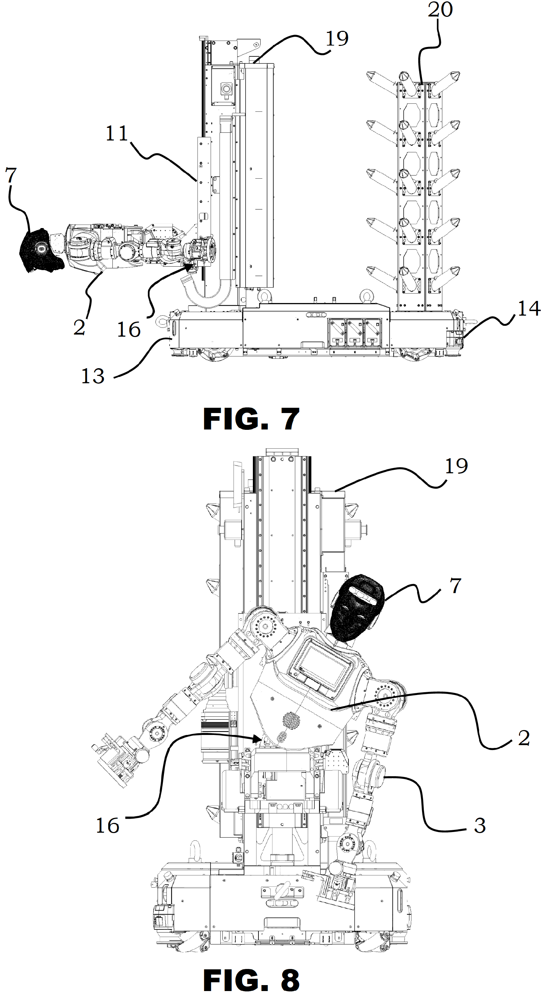

Further, as visible in Figures 7-9, a rotation system 16 of the robotic torso in a pitch direction and/or in a roll direction and/or in a yaw direction is provided.

The maximum possible pitch angle is generally 90°. Given the required payload and the additional weight borne by manipulation element 5, this angle is indeed a significant constraint, but in practice it allows robot 1 to achieve the maximum possible reach.

Specifically, preferably, two coil springs 22 are provided, acting on the same axis as a pitch control electric motor 23. In this way, the greater the angle required, the greater their contribution will be. The increase in the supporting load is exactly proportional to the weight to be supported, which increases with the angle.

This allows reaching the ground with the arms also thanks to the above angle of 90° with respect to the telescopic column 19, with the robotic torso 3 parallel to the ground and to the electric motor 23 coupled to the compensation coil springs 22 that reduce the load seen by the electric motor 23.

A rack-and-pinion pair is always made with a play compensation gear. That is, it is a "half" pinion that works in opposition to the rack teeth, eliminating the residual play present in all the teeth.

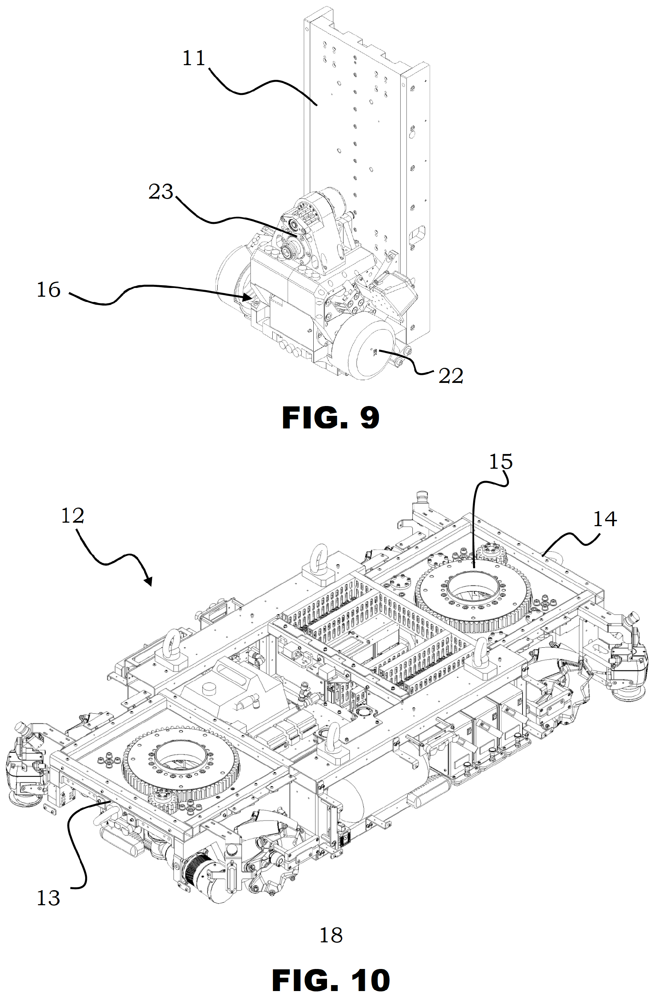

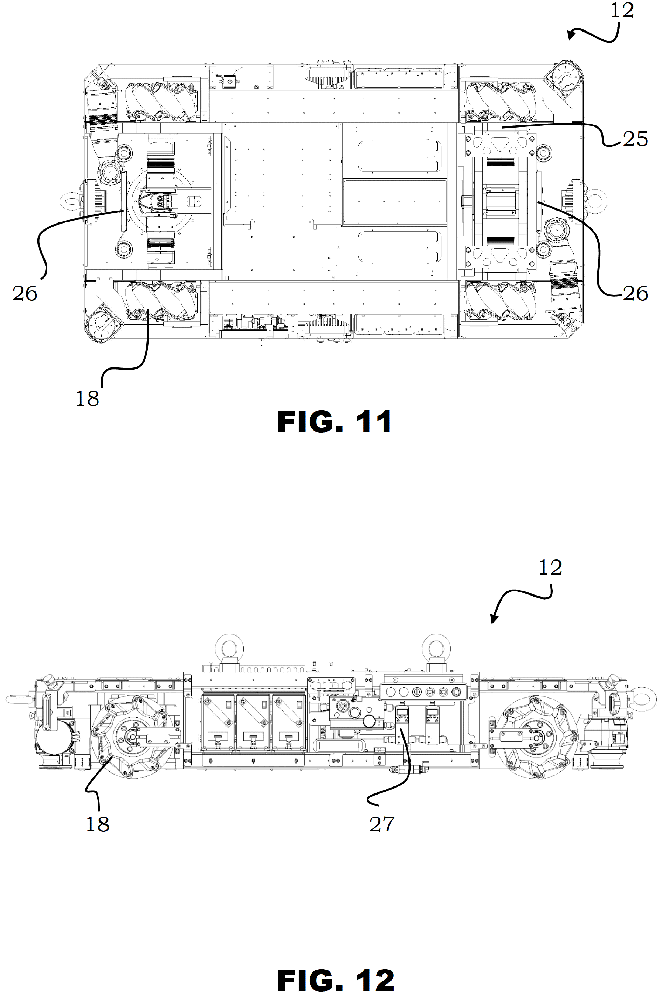

The support column 11 fits on a navigation and transport base 12, visible in greater detail in Figures 10-12, close to a front end 13 thereof.

The base 12 is defined between said front end 13 and a rear end 14.

In substantially central position between these two ends, or in a closer position to one of these front end 13 and rear end 14 a transport plate 15 comprising transport elements is provided.

The support column 11 and the transport plate 15 are adapted to rotate about an axis that is transversal to the navigation and transport base 12 in a coordinated and counter-rotating and/or selective manner.

In this way, it is possible for the robotic torso 2 to rotate and to practically collect an object that is transported on the transport plate 15 of the base 12 or to place an object picked from a static position and place it onto the support plate 15.

In the present embodiment, the base 12 is constituted by a main frame 17.

An autonomous moving system 18 for the base 12 is fixed to said main frame 17.

In said embodiment, the autonomous moving system 18 comprises at least four wheels of the mecanum type arranged sideways in pairs opposite the base 12.

Still in the represented embodiment, two motorized mecanum wheels are rigidly fixed at the front of the main frame 17, whereas at the rear the mecanum wheels, preferably still motorized, are mounted on a tilting system, or oscillating bridge 24, with preloaded springs. The preferred and non-limiting choice of not rigidly mounting all of the four wheels is dictated by the generic real conditions.

The wheels are connected each to a motor through a gearbox 25.

Further, an encoder external to each wheel is preferably provided to have a double reading on the position of the wheel itself, so as to have a safe control of the position via the double reading channel that is thus created.

The motors of the wheel perform speed control on the motion control drive encoder. In this application, the chosen drives have the chance to manage 4 speeds (SLS 1-4).

The external encoder is used, along with the internal encoder, with a reduction ratio of 64:1, to determine if there is slippage on the kinematic chain on the single wheel.

The rear suspension is made by a simple rigid bridge with central joint, in order to overcome small bumps in the ground and to always have the four wheels in contact with the ground. The suspension stroke at the wheel varies from plus 5 mm to minus 5 mm.

The base 12 is sized to overcome frontally ramps with a maximum inclination of 8%, equal to approximately 4.5°.

The minimum height from the ground is 25 mm.

The following macro groups are preferably positioned on the main frame 17 of the base, listed herein still by way of non-all-inclusive example: batteries, each with a capacity of 40Ah, a 1000W DC converter, laser scanner sensors, and 26 magnetic strips positioned beneath the base 12, one on the front and one on the back of robot 1, cameras with filter, one for each side, LEDs to be activated by logic based on movement in space, preferably coloured arrows, for instance orange, to indicate the movement area and the change of direction; an accelerometer to detect, for instance, when the robot is on a ramp and adjust speed and acceleration accordingly, holes for lifting eyebolts, manually operated vertical axis "pins" for lifting the base 12 in case of problems and therefore the possibility of being able to move it with a forklift, a basic "Nuc Down" control, a Robox with an integrated safety PLC and associated expansion modules, USB and LAN input hubs, and USB and/or LAN ports, an on/off switch with a removable key, 48V/24V indicator lights, and a reset button.

The navigation and transport base 12 and/or the at least one manipulation element 5 of the robot 1 provide for a drive of the pneumatic type.

The manipulation element 5 further comprises a suction cup system with Venturi vacuum generator.

Preferably, even the telescopic tower 19 is provided with a gear motor supported by a pneumatic actuator, in particular a pneumatic cylinder 28 connected to the base 12 that allows reducing the vertical load, and therefore the torque, which the motor gear must support for moving, also reducing the electric consumption, with the movement of air between the cylinder chamber and tanks. The compressor will only have to compensate for the air losses in the circuit which cause a reduction in pressure.

Four tanks, preferably but not limited to at least 10 litres each, are connected at the outlet to the lower chamber of the pneumatic cylinder, while at the inlet they are connected to a solenoid valve, kept closed during normal operation. The upper chamber of the cylinder is free to vent to air through a silencer. During operation, the cylinders and the lower chamber form a variable volume at uniform pressure.

During the descent phase, the volume varies from 46 liters to 40 liters, decreasing by approximately 13%, while the pressure, and therefore the force of the cylinder, increases inversely. Vice versa, during the ascent phase, the situation reverses.

Therefore, the compressor upstream of the tanks allows the nominal pressure to be calibrated based on the actual weight and to ensure that the minimum necessary pressure is maintained. It will therefore be necessary, with the real value of the weight and the friction present (sliding, rolling, viscous, etc.) and the efficiency, to determine the correct pressure value to make the engine work in the best conditions, generally around the nominal torque.

The following preferred but not limited accessories are also present on the column stator: a light signal column, an acoustic signal, a router, a condensation vent for the tanks, motor braking resistors.

During the descent phase the electric motor acts as a "brake" generating current that must be dissipated, and for this reason a resistor is added which transforms the electrical energy into heat which is disposed of externally.

The signalling light column and the acoustic alarm are adopted to ensure compliance with the machinery directive, increasing safety during the movement phases of the robot 1.

The acoustic alarm is activated when robot 1 lifts itself above the metre mark before each start and restart of robot 1 with an activation delay of, for example, three seconds, so as to make the operator move away and generally to warn of the movement. The signalling light column indicates the status of the machine.

As for the other pneumatic drives, on the main frame 17 of the base 12 a compressor, an air treatment unit, which includes a 3/2 solenoid valve for emptying the system, vacuum valves, opening/closing valves generally for manipulation element 5, a tank for the vacuum and for opening/closing manipulation element 5 and a condensation drain tap are provided.

The base of the valves comprises 5/3 closed center valves for managing the opening/closing of manipulation element 5 and, as mentioned, the 3/2 NC valves for managing the vacuum of the suction cups on the manipulation element 5. Actually, these 3/2 valves manage the air that is sent to the Venturi vacuum generators mounted on the manipulation element 5.

In other words, from the base 12 a pneumatic group 27 is developed, generally at 24/48V, which also allows the use of pneumatic manipulation elements 5 with performances and force values significantly higher than the prior art available to date, with a payload greater than 8 kg real for each robotic arm 3. However, nothing prevents from providing more manipulation elements 5 within a single robotic arm 3.

The specific portion of the management of this pneumatic part of the manipulation elements 5 is often moved inside the robotic torso 2, and in correspondence with the manipulation element 5 a suction cup system with Venturi vacuum generator 29 can be further provided, visible in Figure 4, still to increase the gripping capacity of various types of tools as well as integrating movement with linear or rotary pneumatic cylinders.

The circuit of the pneumatic part which starts from base 12 is composed, preferably, of exemplary and non-limiting elements set out below.

On the branch leading to at least one manipulation element 5, there is a 3/2 NO solenoid valve, used to separate this branch of the pneumatic line of the valves of the manipulation element 5 from the rest of the system, a proportional pressure regulator with the aim of regulating the pressure of the manipulation element 5 circuit, generally set to 5 bar with the possibility of setting a threshold below which additional pressure is requested and the compressor is activated, a storage tank, a group of solenoid valves controlled in Ethercat and with the management of the input/output module. The 3/2 NO valve must remain open during the compressor charging phases and closed for the rest of the time, to prevent air from returning to the compressor and filter circuit. The solenoid valve group may include, for example, an Ethercat module, a digital output module, a digital input module, a pair of 3/2 valves for vacuum control, and a pair of 5/3 DC valves for the opening/closing control of the manipulation element 5.

On the branch of the compensation cylinder there are a 3/2 NC solenoid valve, used to separate the pneumatic line branch of the compensation cylinder from the rest of the system, a valve that always remains closed and is opened only to empty the system, in parallel a non-return valve that ensures that the pressure inside the tanks is not discharged during the compressor charging phase, a proportional pressure regulator to regulate the pressure of this branch of the compensation cylinder generally set to 5 bar with the possibility of setting a threshold below which additional pressure is required and the compressor is activated, and at least four accumulation tanks.

To power the base, the present preferred embodiment of the invention provides a battery system, preferably a pack of six batteries.

They are arranged in independent rows along a longitudinal development of the navigation and transport base 12 and supply power by discharging one row at a time.

This means that power is supplied by one row of batteries, and when this runs out, power is automatically transferred to the second row of batteries.

Thus configuration allows, whether these are disposable batteries to be replaced or rechargeable batteries to be disconnected, performing the disconnection by acting on just one side of the robot 1 in an immediate and simplified way for the operator.

Each battery may be removed independently, therefore it is possible to replace the single battery, an entire side or all of the six batteries without having to wait for the charging time. This allows for convenient management and continuous operation without charging pauses. This solution represents an improvement in the current sector, given that prior art generally envisages induction charging by passing over elevated structures that enclose the charging system. However, this entails a significant disruption to the production area and a very high overall cost of the structure.

Moreover, it is possible to recover the current generated by the drive motor of the telescopic tower 19 to recharge the batteries.

Moreover, in the embodiment represented in the appended figures, the above mentioned transport elements are provided with a vertical development element 20 with hooking portions 21 at the transport plate 15.

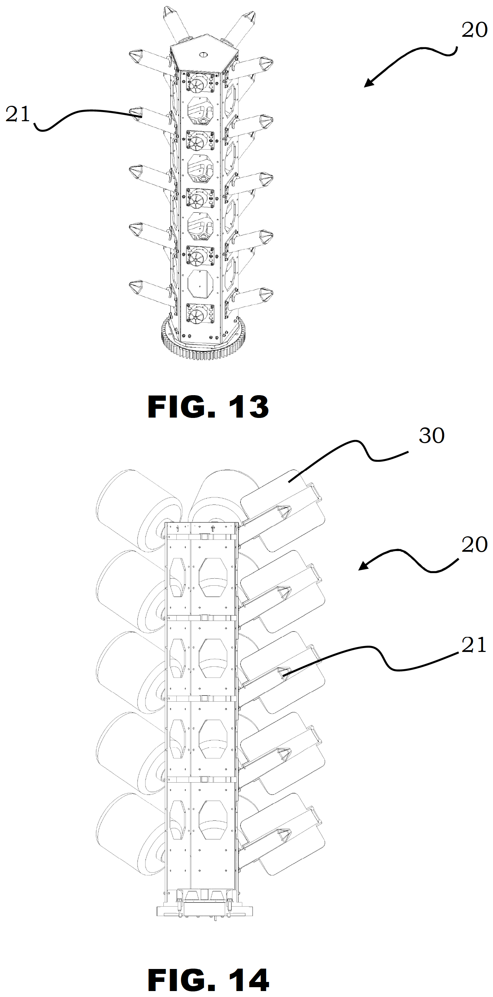

The vertical development element 20, visible more in detail in Figures 13 and 14, is preferably telescopic.

In the exemplifying and non-limiting embodiment herein represented, a vertical development element 20 shaped to carry objects in the shape of reels 30 is provided.

The adoption of this additional feature minimises navigation time, effectively creating a small mobile warehouse. In this embodiment, the hooking portions 21 are made of radial pins tilted upwards to reduce the accidental release of the reels 30 themselves, arranged over five levels in a pentagonal layout, resulting in a total of twenty-five hooking sections 21.

A preferential motorization at the base of the system allows for complete rotation and helps ensure that robotic torso 2 and robotic arms 3 can reach every free attachment portion 21.

The robot 1 is also preferably able to load the reels 30 by knowing the status of the magazine and moving according to pre-recorded logic, thus reducing cycle times.

The position is given by the encoder present on the motor.

In this case too, a double pinion is provided, i.e. with a play compensation system, a system which in this case allows to avoid a final position error of the support pin well above the play between the cardboard tube of the reel 30 and the pin 21, a condition which would generate the collision of the reel 30 against the pin 21.

The axis of the motor is preferably limited in current, and possibly also in maximum speed, directly in the drive to reduce any human or programming errors.

The section visible in Figure 14 highlights the storage position of the reel 30 with respect to the pin 21, with the latter having a plate welded at 90° which represents the stop of the reel 30 in the transport position.

Generally, the robot 1 loads the reels 30 from the bottom up and picks them up from the top down so as to have a uniform deposit even on the single level and to ensure a load distribution as close as possible to the ground.

Most of the prior art systems do not have a non-static storage back station, therefore with at least one degree of freedom.

As said, the vertical development element 20 may be telescopic to position the robotic arms 3 of the robot 1 at the same height.

Moreover, the vertical development element 20 may be managed wholly or partially as a tool store, enabling work in a variety of environments and a variety of activities.

Alternatively, the vertical development element 20 may be replaced with a base for receiving whole pallets or Euro pallets with or without side, with a rotation that ensures complete reachability of the robot 1 for picking and placing.

In this case, it is also possible to provide an automatic loading system for a Euro pallet directly from the ground, delegating the complete management of the loading and unloading flow to robot 1.

It is emphasized that the robot 1 according to the present invention allows overcoming the drawbacks of the known solutions, primarily it ensures to reduce to a minimum the navigation time for picking up and depositing objects from the loading point to the unloading point.

Further, the robot 1 represents, advantageously, a forklift that is able to load and unload the material autonomously, being able to replace not only the man but also the purchase of a forklift or an electric pallet truck, to the full advantage of the cycle time, the number of employees and the overall efficiency.

Still advantageously, the robot 1 goes in the direction of industrial needs that very often require payloads exceeding 5 kg for each gripping element and a trolley available to the operator, which is pushed or dragged by the operator, and the present invention allows increasing the force thanks to the use of a pneumatic drive and the efficiency by reducing to a minimum the number of trips necessary for gripping or depositing objects.

Finally, advantageously, it is possible to modify the rear part by adopting various solutions such as the vertical development element 20 or by adding a Euro pallet lifting system without having to create stations for picking up and storing the Euro pallets, as occurs in prior art solutions which, having a high height from the ground, require metal bridge structures to support the pallets and lift them from below.

Obviously a person skilled in the art, in order to meet contingent and specific needs, may make several changes and variants to the robot 1, all of them falling within the scope of protection of the invention as defined by the appended claims.

In particular, different materials may be adopted depending on current operational and cost requirements, and different functions may be implemented depending on technological developments and regulatory requirements.

## Claims

1. An operator and transporter humanoid robot (1) comprising:
- a robotic torso (2);
- at least two robotic arms (3) connected sideways to said robotic torso (2) opposite each other;
- at least one support column (11) for said robotic torso (2);
- a navigation and transport base (12) defined between a front end (13) and a rear end (14), said support column (11) being fitted close to said front end (13) of said navigation and transport base (12), said navigation and transport base (12) comprising a transport plate (15) comprising transport elements in a substantially central position between said front end (13) and rear end (14) or close to said rear end (14) of said base (12);
**characterized in that** said support column (11) and said transport plate (15) are adapted to rotate about an axis that is transversal to said navigation and transport base (12) in a coordinated and counter-rotating and/or selective manner.

2. The robot (1) according to claim 1, further comprising at least one manipulation element (5) at an end (6) of each robotic arm (3) opposite the connection to said robotic torso (2).

3. The robot (1) according to claim 2, wherein said navigation and transport base (12) and/or said at least one manipulation element (5) are provided with a drive of the pneumatic type.

4. The robot (1) according to claim 3, wherein said manipulation element (5) further comprises a suction cup system with Venturi vacuum generator (29).

5. The robot (1) according to any one of claims 1 to 4, wherein said support column (11) of said robotic torso (2) is integrated in a telescopic tower (19) adapted to raise said robotic torso (2) with respect to said navigation and transport base (12).

6. The robot (1) according to any one of claims 1 to 5, further comprising an autonomous moving system (18) for said navigation and transport base (12).

7. The robot (1) according to claim 6, wherein said autonomous moving system (18) comprises at least four wheels of the mecanum type arranged sideways in pairs opposite said navigation and transport base (12).

8. The robot (1) according to claim 7, comprising at least one encoder external to each wheel, adapted to detect a position of said wheel.

9. The robot (1) according to any one of claims 1 to 8, further comprising a rotation system (16) of said robotic torso (2) in a pitch direction and/or in a roll direction and/or in a yaw direction.

10. The robot (1) according to any one of claims 1 to 9, wherein said transport elements comprise a vertical development element (20) with hooking portions (21) at said transport plate (15), said vertical development element (20) being preferably telescopic.

11. The robot (1) according to any one of claims 1 to 10, further comprising a battery system for said navigation and transport base (12), said battery system being arranged in independent rows along a longitudinal development of said navigation and transport base (12) and being adapted to supply power one row at a time.

12. The robot (1) according to any one of claims 1 to 11, further comprising a robotic head (7) connected to said robotic torso (2).
